Europäisches Patentamt

European Patent Office

Office européen des brevets

(11) Publication number: **0 263 588**
**A1**

## (12) EUROPEAN PATENT APPLICATION

(21) Application number: 87307489.2

(22) Date of filing: 25.08.87

(51) Int. Cl.⁴: **A61C 1/00 , A61C 19/00**

(30) Priority: **08.09.86 PT 83329**

(43) Date of publication of application:
**13.04.88 Bulletin 88/15**

(84) Designated Contracting States:
**AT BE CH DE ES FR GB LI LU NL SE**

(71) Applicant: **Roseiro, Antonio Henriques
Rodrigues
Azinhaga Vale de Tojeiro 29, Lazarim
P-2825 Monte Da Caparica(PT)**

(72) Inventor: **Roseiro, Antonio Henriques
Rodrigues
Azinhaga Vale de Tojeiro 29, Lazarim
P-2825 Monte Da Caparica(PT)**

(74) Representative: **Harrison, Philippa Dinah et al
A. A. THORNTON & CO Northumberland
House 303-306 High Holborn
London WC1V 7LE(GB)**

(54) Dental apparatus for use in paedodontics.

(57) Dental apparatus for use in paedodontics comprises a support in the shape of a humanoid robot, having a head (25), arms and a body (14, 20). The support is designed to distract a child during treatment and may be painted in attractive colour(s). The support is provided with required items of dental equipment including a slow speed micromotor (11) and a high speed motor (13), each supported in one of the robot's hands (10, 12), an air/water syringe (15) and an X-ray plate viewer (16). A tape recorder/player is mounted on the back of the robot's body and may be connected to a microphone and a loudspeaker or headphones for the child. The robot may have coloured electric bulbs for the nose (4) and eyes (5) and a flashing helmet (3). The robot is movable in wheels (2), some of which may be motorised, and the operation of the motor may be controlled remotely using an infra-red or radio signal.

FIG.1

# DENTAL APPARATUS FOR USE IN PAEDODONTICS

This invention relates to dental apparatus for use in paedodontics.

A problem with existing paedodontics dental apparatus is that it, together with the general atmosphere in the dentist's consulting room, can combine to create a sense of fear and anguish in the child requiring treatment. This can hinder treatment of the patient by the dentist.

In accordance with the present invention there is provided dental apparatus for paedodontics comprising a support in the form of a humanoid robot having a body and arms, the support being mounted on wheels;

a) a slow speed micromotor and associated equipment for odontologic treatments supported on support means corresponding to a first hand of the robot;

b) a fast speed motor and associated equipment for odontologic treatment supported on support means corresponding to a second hand of the robot;

c) a syringe for air or water supported on the body of the robot;

d) viewing means for the observation of X-ray plates provided on the body of the robot;

e) control means and warning lights for the equipment provided on an upper part of the body of the robot;

f) a tape recorder/player in a generally parallelipipedic box provided on the back of the body of the robot;

g) connections for the supply of electricity, water and compressed air to the associated equipment on the rear of the body of the robot, and pedal operated electric switch means;

h) in the front of a lower part of the body of the robot, a valve for controlling air supplied to the equipment and a pressure gauge; and

i) a system for distributing electric current, water and air to the equipment mounted inside the body of the robot.

There can thus be provided a dental apparatus which may display, in a manner attractive to the child being treated, all the odontologic instruments required for the various treatments. In addition to its external aspect attracting the attention of the child the apparatus may also contain a number of other features intended to attract the child's attention during and after treatment. In practice, this has been found to give positive results.

Advantageously the apparatus, which is shaped like a humanoid robot, moves on electrically operated castors. Furthermore, to attract the childs attention, it may be painted in bright colours.

There is therefore provided a dental apparatus for use in paedodontics which may resolve the problem of existing apparatus.

An embodiment according to the invention will now be described, by way of example only, with reference to the accompanying drawings, in which:

Fig. 1 is a perspective view of a first embodiment of the invention;

Fig. 2 is a front elevational view of the embodiment of Fig. 1;

Fig. 3 is a left side elevational view of the embodiment of Fig. 1;

Fig. 4 is a right side elevational view of the embodiment of Fig. 1;

Fig. 5 is a rear elevational view of the embodiment of Fig. 1;

Fig. 6 is a schematic electric circuit diagram of the electronic equipment of the embodiment of Fig. 1;

Fig. 7 is a schematic diagram of an electric circuit for the supply of electricity to the castors of the embodiment of Fig. 1;

Fig. 8 is a schematic block diagram of an electric circuit for infra-red control of the embodiment of Fig. 1;

Fig. 9 is a schematic diagram of circuits for the distribution of electricity, water and air in the embodiment of Fig. 1; and

Fig. 10 is a schematic representation of a system for feeding water/air to the odontological accessories of the embodiment of Fig. 1.

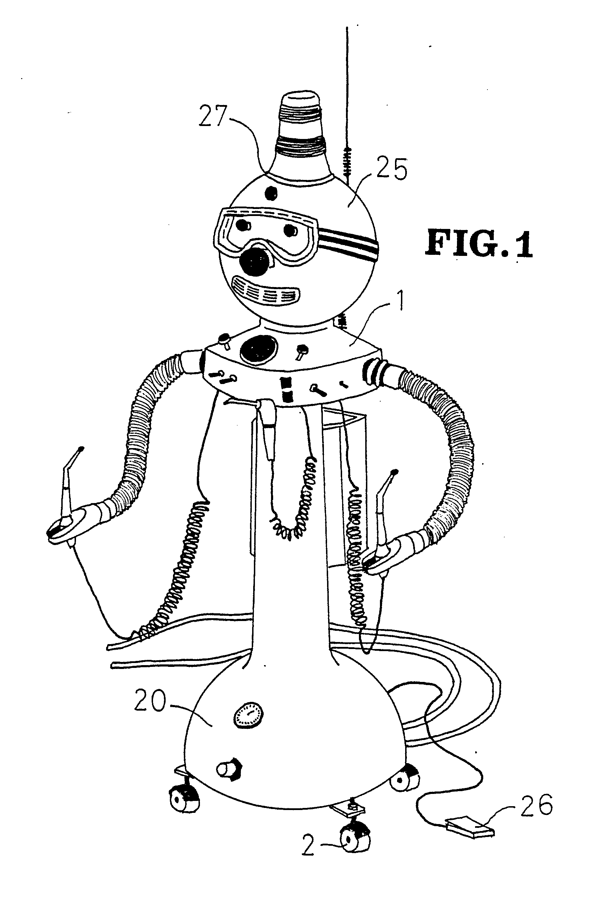

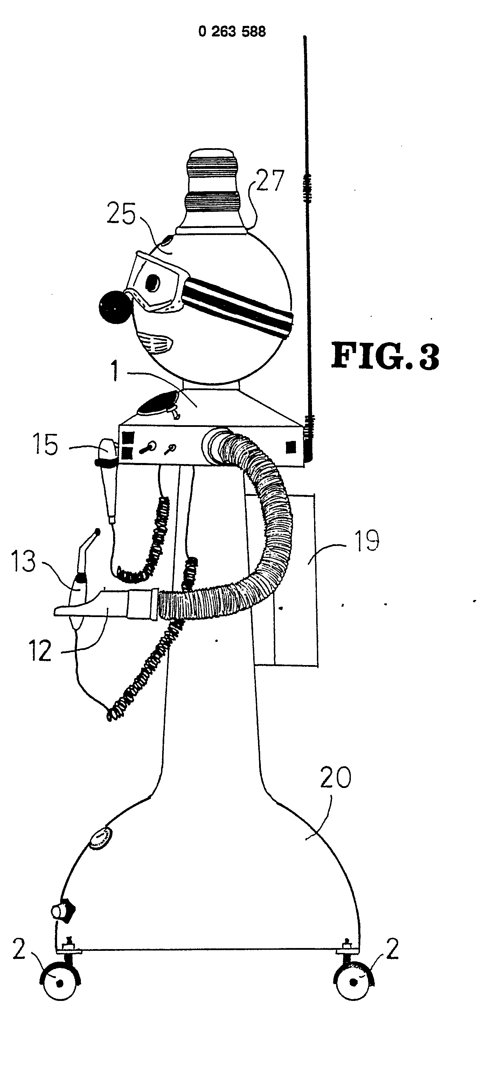

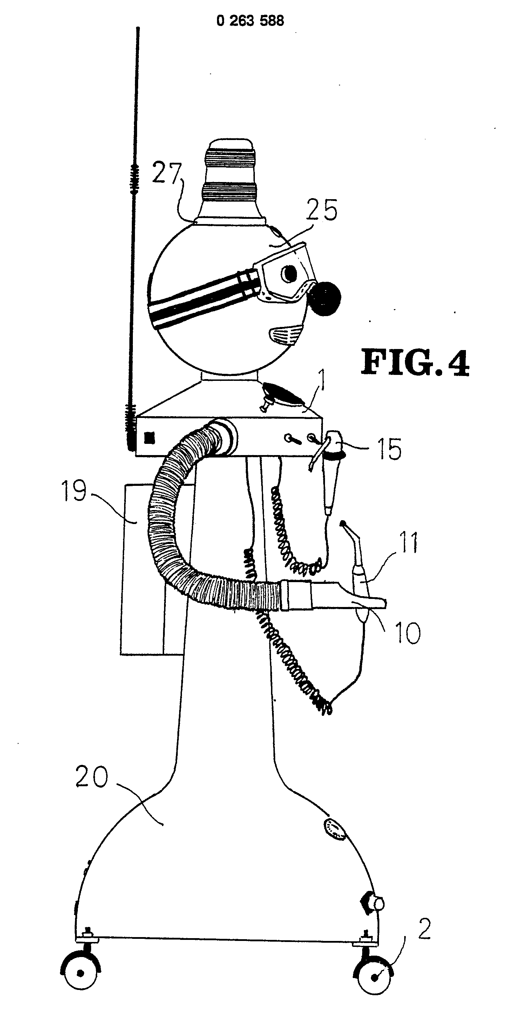

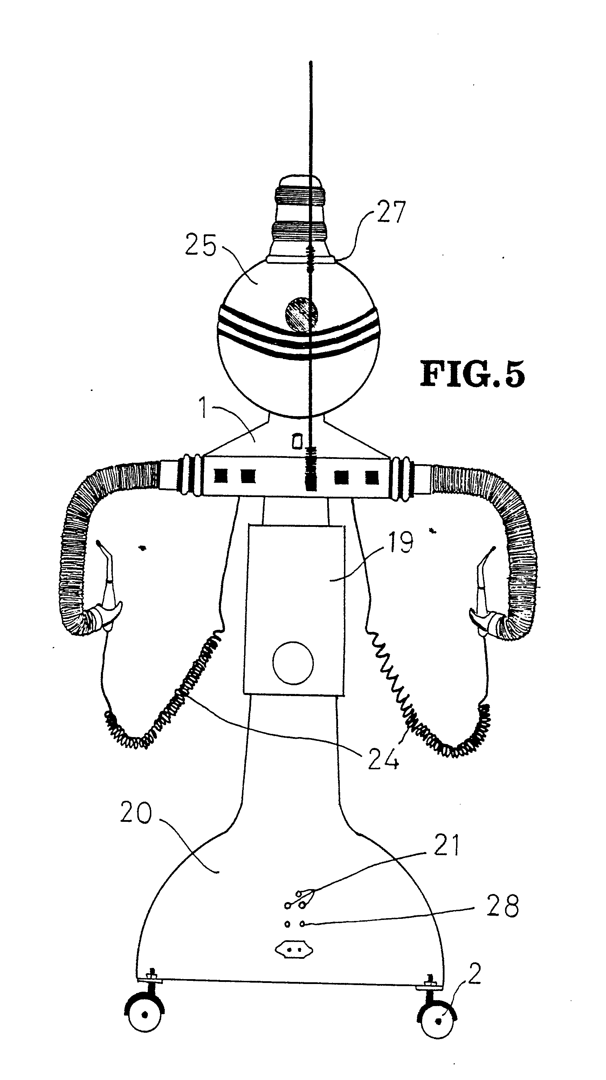

In Figs. 1 to 5, an embodiment of dental apparatus according to the invention is shown comprising a support 1 in the form of a humanoid robot, having a head 25, and a body comprising an upper body part or chest (14), with an upper portion sloped at an angle, and a lower body 20 resting on a plurality of wheels, for example, eight wheels 2, of which six may be free running and two may be driven by an electric motor.

The external appearance of the robot 1 is intended to immediately attract the attention of children undergoing treatment. This may involve the use of coloured electric bulbs for example for the nose 4 and eyes 5, with the exterior of the robot being painted in a colour or colours suitable for young children. In addition, the robot 1 may also be provided with one or more of the following additional features:

1. a green transparent helmet or cap 3 with an anti-collision system as used on emergency transport;

2. an electric bulb for the nose 4 which can be lit up, for example, at a constant frequency, or by the regularity of the movement of the robot, or both; and

3. two small electric bulbs set into the eyes 5 which can light up in a similar manner to the nose 4. These may function separately of each other and/or of the nose bulb.

A tape recorder/player is mounted in a parallelepipedic box 19, situated like a back pack on the back of the robot, and having outputs leading to loudspeakers installed, preferably, in the mouth of the robot and/or to ear-pieces which may be put in the ears of the child undergoing treatment to, if desired, reproduce sounds recorded on a cassette, with the option of distorting the sounds to give them the metallic timbre associated with robot speech.

The apparatus may be provided with a transmitter/receiver of voice signals which are frequency modulated (F.M.) on an infra-red frequency carrier signal which is received or transmitted by an aerial 27. This allows an initial link to be established between dentist and patient, prior to the latter becoming aware of the former by a first visual contact.

The aerial 27, which may be circular, can be provided at the base of the helmet 3. In addition to the above, it can be used for the reception of coded signals, transmitted on an infra-red carrier frequency, for the remote control of the traction motors of the unit driving the wheels 2.

After transmission by infra-red carrier signals, the received sound signals may be "delayed", before being presented as a humanoid voice.

Sound signals, whether from such communications, from a local microphone or from the tape recorder may, in addition to being "delayed", be used to control flashing of the lights forming the eyes 5 and nose 4 of the unit.

The apparatus shown in Figs. 1 to 5 also includes the following equipment, provided for use in odontological treatment:

a) A slow speed micromotor 11, with respective odontological accessories or equipment and a control for the dentist, removably mounted on a support provided by a first of the robot's hands 10;

b) A high speed motor or turbine 13 with respective odontological accessories or equipment and a control for the dentist, removably mounted on a support provided by another of the robot's hands 12;

c) A syringe 15 for air or water suspended from a hook in the lower centre of the robot's upper body 14;

d) A viewer 16 for viewing X-ray plates provided on the upper centre of the robot's upper body 14.

Provided on the edge of the upper part of the robot's chest 14 and around its circumference, are various bulbs 18 for monitoring the operation of the odontological and other equipment. In addition, there may be provided electric switches and rotary controls 17 for controlling or changing the operation of the equipment.

In the preferred embodiment of the invention, electrically energy for the equipment provided on the robot is supplied through an electrical energy distribution system and may be stored in batteries for future use. Compressed air and water for the equipment are similarly distributed by a distribution system in the interior of the robot and control knobs and rotary controls are provided on the robot's upper body and are the only accessible and visible parts of the respective systems. Each system is connected to an external supply by means of a system of quick-release connections 21 provided in the posterior of the lower body 20 of the robot.

In order that the pressure of compressed air can be properly controlled there is provided a manually operated valve in the anterior part of the lower body 20 of the robot. This enables compressed air to be distributed to the odontological equipment. There is also provided a pressure gauge 23 for indicating the air pressure.

A pedal 26, incorporating an electric microswitch, allows the dentist to switch on or .off the supply of electric current as required, leaving both of the dentist's hands free and therefore available for any necessary odontological treatment.

The supply of water and compressed air to each of the items of odontological equipment is individually interrupted or established by means of a service valve operated by a lever adjacent the respective equipment.

The system for feeding fluids to each of the abovementioned items of odontological equipment a), b) and c) may include coiled hoses 24 of the type usually employed for this purpose in odontological apparatus, which hoses 24 terminate adjacent the respective items of equipment.

On the robot's back, extending from the region of one of the lateral sides of the parallelepipedic box 19 in which the tape recorder/player is situated, is an aerial 6 which, besides being decorative, can also be used as an antenna for receiving radio signals, for example for use where the electric motors which drive the wheels 2 are radio controlled.

The lower body of the robot may, as shown, be supported on a plurality of wheels 2, e.g. four or eight wheels, to permit it to move freely about the consulting room floor whenever it is required. The electric motors for driving the wheels may be provided in the interior of the lower body 20. To control the wheels there is provided a switch, fitted to an inside edge of the robot's upper body 14. There is also provided a changeover switch for reversing the direction of the motor.

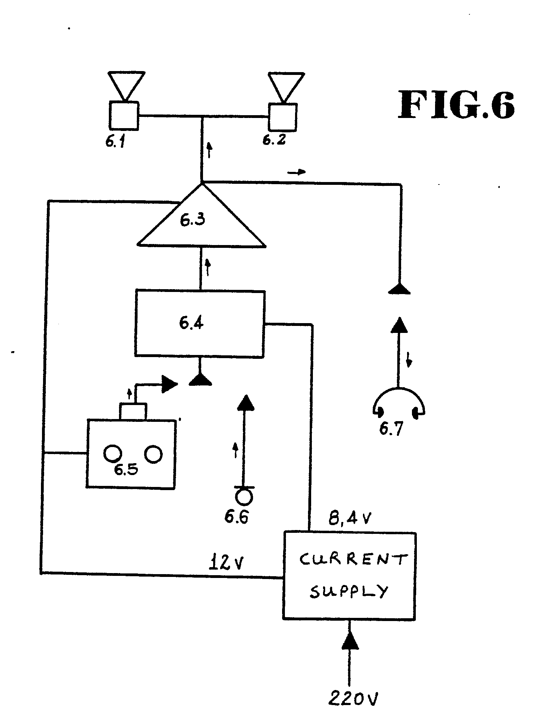

In Figs. 6 to 10 there are shown various circuits for the supply of electrical energy, compressed air and water to the most important component parts of the dental apparatus.

The operation of the unit will be readily understood from the diagrams by those skilled in the art, with the aid of the following list of illustrated components.

In Fig. 6, the reference numerals denote the following:

6.1. and 6.2 -loudspeakers;
6.3. -linear amplifier;
6.4. -"Delay" line
6.5. -cassette deck;
6.6. -microphone;
6.7. -earphones

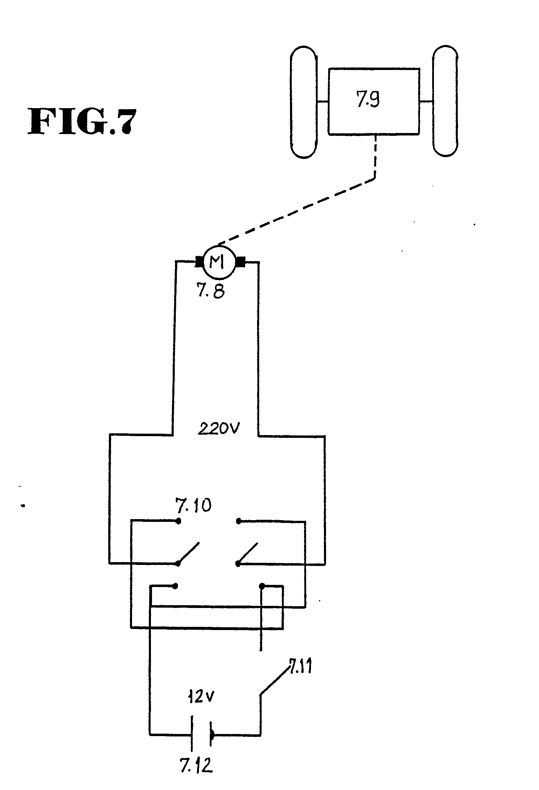

In Fig. 7, the reference numerals denote the following components:

7.8. -electric drive motor;
7.9. -wheel system;
7.10. -changeover switch
7.11. -on-off switch;
7.12. -battery.

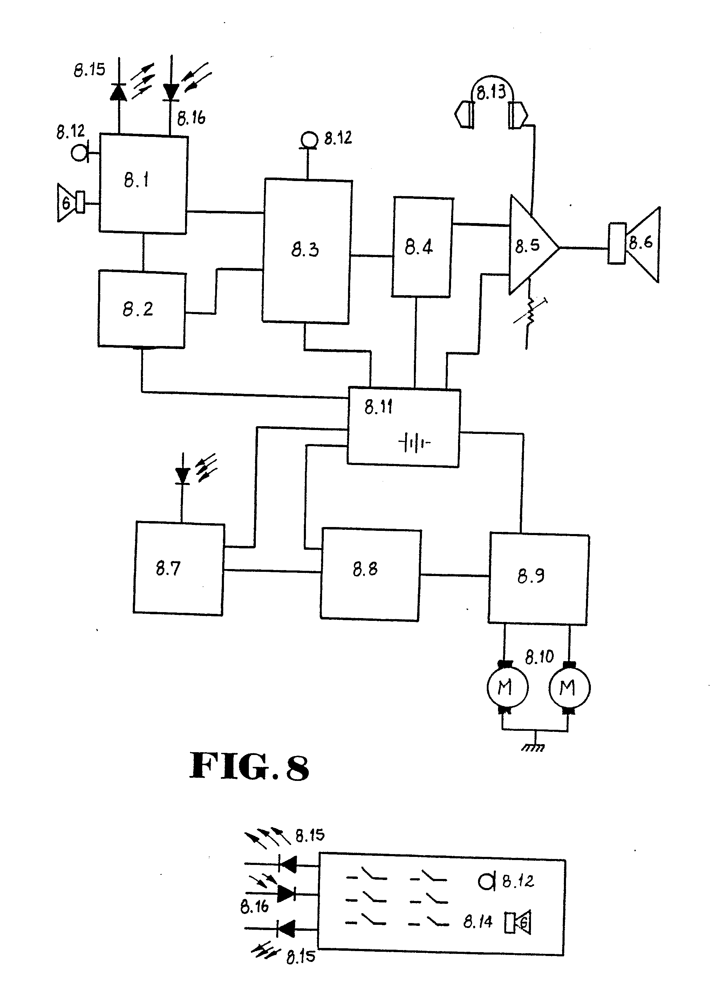

The reference numbers used in Figure 8 denote the following components:

8.1. -infra-red transmitter/receiver;
8.2. -tape recorder/player;
8.3. -audio mixer;
8.4. -"delay";
8.5. -operational amplifier;
8.6. -loudspeaker
8.7. -infra-red receiver;
8.8. -information decoder;
8.9. -motor control;
8.10. -motors;
8.11. -battery;
8.12. -microphone;
8.13. -earphones;
8.14. -remote control;
8.15. -infra-red transmitter;
8.16. -infra-red receiver.

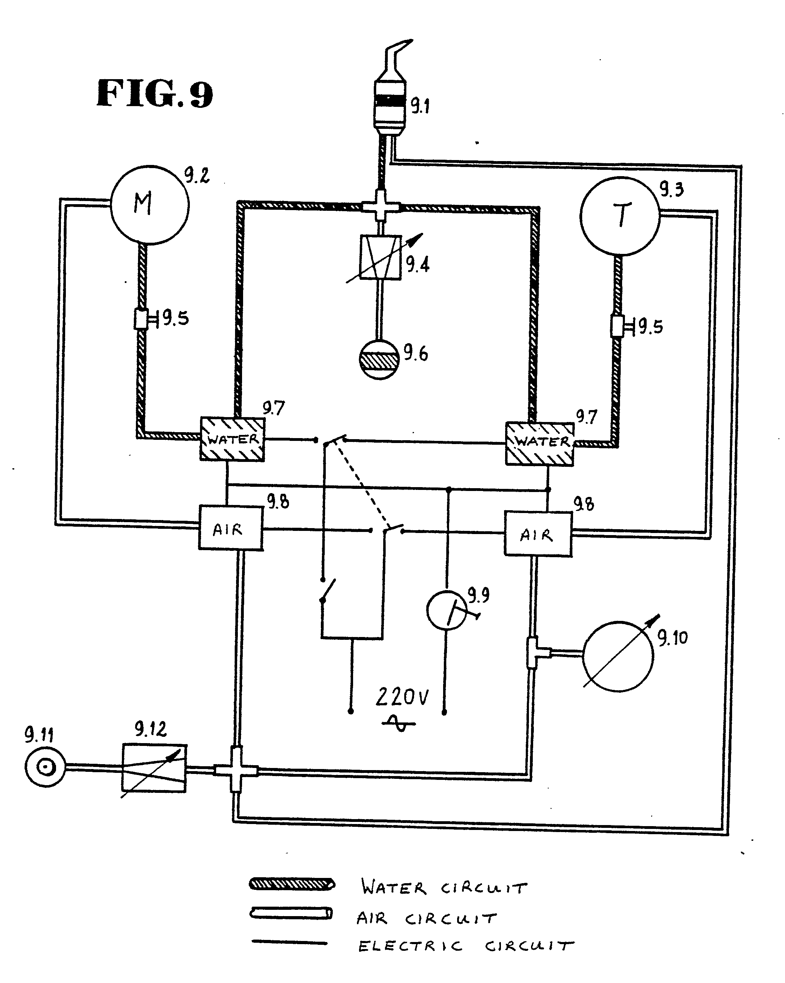

In Fig. 9, the reference numbers used denote the following components:

9.1. -syringe;
9.2. -micromotor;
9.3. -high speed motor
9.4. -water regulator;
9.5. -valve;
9.6. -water supply inlet;
9.7. -electrically operated water valve;
9.8. -electrically operated air valve;
9.9. -foot pedal;
9.10. -pressure gauge;
9.11. -air supply inlet;

9.12. -air regulator.

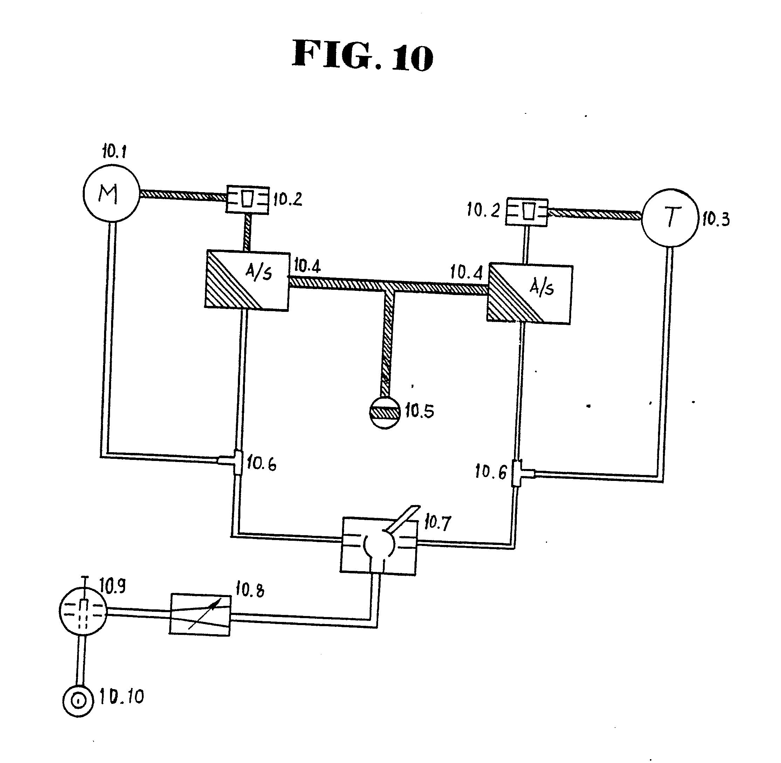

Finally, the reference numbers used in Fig. 10. denote the following components of the odontologic apparatus:

10.1. -micromotor;
10.2. -water valve;
10.3. -high speed motor;
10.4. -automatic for sprays;
10.5. -water supply inlet;
10.6. -T-shaped joint;
10.7. -changeover valve;
10.8. -air regulator;
10.9. -foot pedal;
10.10. -air inlet.

The electric motors that drive the wheels may be adapted to be controlled by radio (in which case the antenna 6 may be used to receive and reinforce radio signals for the control of operations) or to be controlled by means of infra-red signals (via circular antenna 27).

It will be appreciated that the present invention may include modifications and variations, for example as described below:

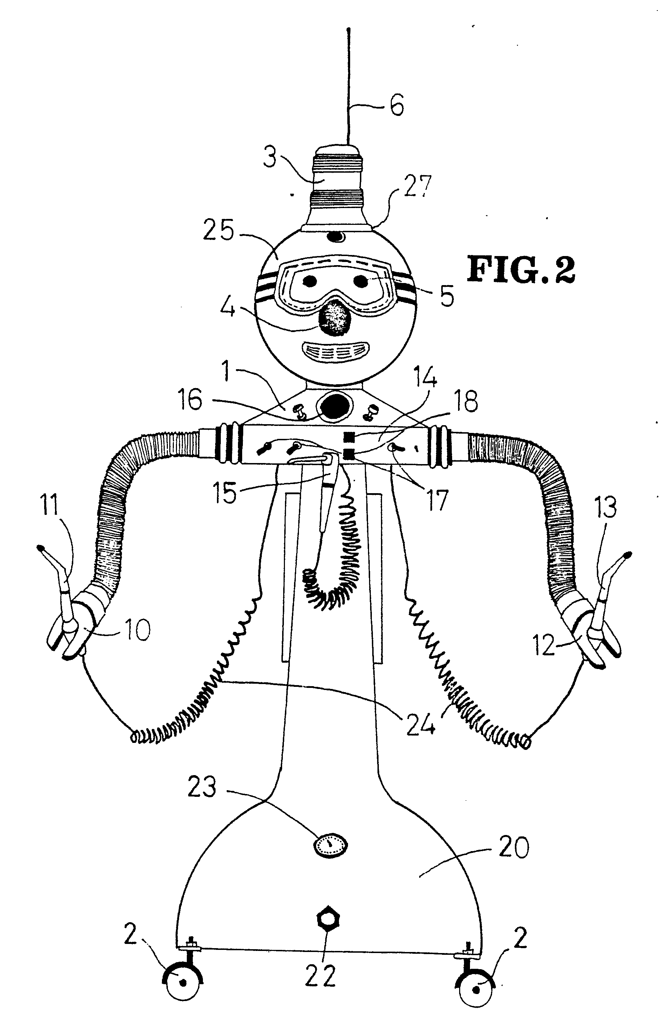

a) The coiled hoses 24 which feed the fluids (water and compressed air) to the items of dental equipment, as shown in Figs. 1 and 2 come from the inside edge at the front of the robot's upper body 14. They may alternatively be contained within the robot's arms and exit near its hands;

b) the robot's arms may be articulated, so that the hands 10, 12 which hold the items of dental equipment may assume various positions in space depending on the dentist's wishes;

c) the robot's head may be adapted to rotate to both the right and the left;

d) an ultrasonic system for the elimination of tartar may additionally be provided;

e) a system of cold light for the polymerization of composites may additionally be provided;

f) an optic fibre system may be provided for the observation of mouth cavities;

g) a microprocessor may be provided for remote control or for other purposes.

As will be appreciated, the functioning of the individual items of odontological equipment is conventional, as is the functioning of the individual additional features.

By providing the apparatus with the appearance of a humanoid robot, as well as including the various additional features, the apparatus is intended to attract the child's attention before and after treatment, thus simplifying the work of the dentist and his assistants by avoiding the undesirable consequences of fright which occur in most children when submitted to dental treatment.

It will be appreciated that alterations and/or modifications may be made to the items of odontological apparatus without departing from the spirit and scope of the invention.

## Claims

1. Dental apparatus for paedodontics comprising a support (1) in the form of a humanoid robot having a body (14, 20) and arms, the support being mounted on wheels (2);

a) a slow speed micromotor (11) and associated equipment for odontologic treatments supported on support means corresponding to a first hand (10) of the robot;

b) a fast speed motor (13) and associated equipment for odontologic treatment supported on support means corresponding to a second hand (12) of the robot;

e) a syringe (15) for air or water supported on the body of the robot;

d) viewing means (16) for the observation of X-ray plates provided on the body of the robot;

e) control means (17) and warning lights (18) for the equipment provided on an upper part of the body of the robot;

f) a tape recorder/player (19) in a generally parallelipipedic box provided on the back of the body of the robot;

g) connections for the supply of electricity, water and compressed air to the associated equipment on the rear of the body of the robot, and pedal operated electric switch means;

h) in the front of a lower part of the body of the robot, a valve for controlling air supplied to the equipment and a pressure gauge; and

i) a system for distributing electric current, water and air to the equipment mounted inside the body of the robot.

2. Dental apparatus in accordance with claim 1, wherein the upper part of the body of the robot includes an inclined portion and a vertical portion, the viewing means (16) are provided on the said inclined portion, and the control means (17), the warning lights (18) and a hook (14) for supporting the syringe (15) are provided on the said vertical portion.

3. Dental apparatus in accordance with either claim 1 or claim 2, comprising an ultrasonic system for the removal of tartar.

4. Dental apparatus in accordance with any one of the preceding claims, comprising means for cold light for the polymerization of composites.

5. Dental apparatus in accordance with any one of the preceding claims, comprising an optic fibre system for the observation of the mouth.

6. Dental apparatus in accordance with any one of the preceding claims, comprising spiral hoses (24) for the supply of fluids to a), b) and c).

7. Dental apparatus in accordance with claim 6, wherein the hoses which supply fluids to a) and b) extend within the robot's arms.

8. Dental apparatus in accordance with any one of the preceding claims, wherein the arms of the robot are articulated.

9. Dental structures in accordance with any of the preceding claims, comprising an electric motor installed in the lower part of the body of the robot and acting on at least one of the wheels for moving the robot.

10. Dental apparatus in accordance with claim 9, wherein the electric motor is radiocontrolled.

11. Dental apparatus in accordance with any one of the preceding claims, wherein the head (24) of the robot is capable of horizontal rotational movement.

12. Dental apparatus in accordance with any one of the preceding claims, comprising earphones and a microphone connected to the tape recorder/player (19) and for recording and reproduction of the voice, with or without distortion.

FIG.1

FIG.2

FIG.3

FIG.4

FIG.5

**FIG.6**

6.1  6.2

6.3

6.4

6.5

6.6

6.7

8,4 V

12 V

CURRENT
SUPPLY

220V

# FIG.7

7.9

7.8

220V

7.10

7.11

12V

7.12

FIG. 8

# FIG.9

9.1

9.2 — M

9.3 — T

9.4

9.5

9.5

9.6

9.7 WATER

9.7 WATER

9.8 AIR

9.8 AIR

9.9

9.10

220V

9.11

9.12

WATER CIRCUIT

AIR CIRCUIT

ELECTRIC CIRCUIT

# FIG. 10

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | FR-A-1 599 618 (MICRO-MEGA) <br> * page 1, line 24 - page 2, line 8; figure * <br> --- | 1 | A 61 C 1/00 <br> A 61 C 19/00 |
| A | US-A-3 949 480 (PAGE) <br> * column 1, lines 34-53; figures 1,3 * <br> --- | 1 | |
| A | GB-A-1 240 071 (KALTENBACH & VOIGT) <br> * page 2, lines 83-106; figure 1 * <br> --- | 1 | |
| A | US-A-2 596 232 (GARDETTO) <br> * column 1, lines 1-6,26-41 * <br> ----- | 1 | |

TECHNICAL FIELDS SEARCHED (Int. Cl.4)

A 61 C 1/00
A 61 C 19/00
A 61 C 15/00

The present search report has been drawn up for all claims

| Place of search | Date of completion of the search | Examiner |
|---|---|---|
| BERLIN | 30-11-1987 | SIMON J J P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)